(19) Europäisches Patentamt
European Patent Office
Office européen des brevets

(11) **EP 1 995 140 B1**

(12) **EUROPÄISCHE PATENTSCHRIFT**

(45) Veröffentlichungstag und Bekanntmachung des Hinweises auf die Patenterteilung:
**16.10.2013 Patentblatt 2013/42**

(51) Int Cl.:
**B60T 13/26** (2006.01)     **B60T 17/22** (2006.01)

(21) Anmeldenummer: **08009345.3**

(22) Anmeldetag: **21.05.2008**

(54) **Verfahren zum Überwachen der Dichtheit eines Druckluftsystems und hierfür vorgesehene elektronische Vorrichtung**

Method for monitoring air-tightness of a compressed air system and electronic device provided for said method

Procédé pour vérifier l'étanchéité d'un système à air comprimé et dispositif électronique pour ledit procédé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.05.2007 DE 102007023819**

(43) Veröffentlichungstag der Anmeldung:
**26.11.2008 Patentblatt 2008/48**

(73) Patentinhaber: **KNORR-BREMSE Systeme für Nutzfahrzeuge GmbH**
**80809 München (DE)**

(72) Erfinder:
• **Bordacs, Zoltan**
**8200 Veszprem (HU)**
• **Krabot, Matyas**
**2316 Tököl (HU)**

(74) Vertreter: **Schönmann, Kurt**
**Knorr-Bremse AG,**
**Patentabteilung - V/RG,**
**Moosacher Strasse 80**
**80809 München (DE)**

(56) Entgegenhaltungen:
**DE-A1- 10 052 664     DE-B3- 10 236 391**
**US-B2- 6 711 507**

**Beschreibung**

Die Erfindung betrifft ein Verfahren zum Überwachen der Dichtheit eines in einem Nutzfahrzeug angeordneten Druckluftsystem sowie eine hierfür vorgesehene elektronische Vorrichtung.

Druckluftsysteme für Nutzfahrzeuge enthalten einen Kompressor, der Druckluft erzeugt und diese über eine Luftaufbereitungsanlage verschiedenen Druckluftverbrauchern zur Verfügung stellt, beispielsweise der Druckluftbremsanlage, der Luftfederungen, der Kupplung und dem Getriebe. Um den zuverlässigen Betrieb von Druckluftsystemen sicherzustellen, sind durch Lekkagen bedingte Druckverluste zu vermeiden. Während größere Leckraten ohne weiteres durch den Führer des Nutzfahrzeugs auf der Grundlage der Systemdrucküberwachung erkennbar sind, ist dies bei geringeren Leckraten nicht unbedingt der Fall. In jedem Fall ist es erstrebenswert, bereits eine geringe Leckrate frühzeitig zu erkennen, damit eine sicherheitsrelevante Vergrößerung des Lecks vermieden werden kann. Aus diesem Grund ist es erforderlich, die Druckluftsysteme von Zeit zu Zeit im Hinblick auf Leckagen zu inspizieren, was regelmäßig einen Werkstattaufenthalt erforderlich macht.

In der DE 102 36 391 B3 wird ein Verfahren zur Prüfung eines Druckmittelspeichers beschrieben bei dem abgefragt wird ob der gemessene Bremsdruck höher oder niedriger als ein festgelegter Vorspanndruck ist. Sollte der gemessene Betriebsdruck höher als der Vorspanndruck sein, wird der Messvorgang wiederholt und bei Abweichungen zwischen Soll- und Ist-Verlauf wird auf eine Beschädigung geschlossen und ein Warnsignal wird vom Steuergerät ausgegeben.

Der Erfindung liegt die Aufgabe zugrunde, auch geringe Druckluftverluste während des Betriebs des Nutzfahrzeugs zu erkennen, um so in die Lage versetzt zu werden, das Druckluftsystem instand zu setzen, bevor es zu größeren und insbesondere sicherheitskritischen Druckluftverlusten kommt.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung besteht in einem Verfahren zum Überwachen der Dichtheit eines in einem Nutzfahrzeug angeordneten Druckluftsystems, mit den Schritten:

(a) Erfassen eines Betriebszustandes von mindestens einem Druckluftverbraucher,

(b) Erfassen eines in dem Druckluftsystem herrschenden ersten Druckes zu einem ersten Zeitpunkt und Erfassen eines in dem Druckluftsystem herrschenden zweiten Druckes zu einem zweiten Zeitpunkt,

(c) Ermitteln eines Kennwertes unter Berücksichtigung der erfassten Drücke und des Betriebszustandes des mindestens einen Druckluftverbrauchers,

(d) Vergleichen des Kennwertes mit einem Vergleichswert.

Es wird also ein automatisiertes Überwachungsverfahren für Druckluftsysteme zur Verfügung gestellt, das insbesondere unter Verwendung einer in dem Nutzfahrzeug installierten Recheneinheit realisiert werden kann. Beispielsweise kann die elektronische Steuereinheit einer Luftaufbereitungsanlage hierzu verwendet werden. Während des Betriebs des Fahrzeugs werden die Betriebszustände der Druckluftverbraucher kontinuierlich erfasst. Unter Berücksichtigung dieser Betriebszustände und durch das Erfassen von Drücken zu verschiedenen Zeitpunkten lassen sich dann Kennwerte ermitteln, die mit Vergleichswerten verglichen werden können. Dieser Vergleich gibt dann Aufschluss darüber, ob ein übermäßiger Druckluftverlust vorliegt. Ergibt sich durch den Vergleich des Kennwertes mit einem Vergleichswert, dass ein übermäßiger Druckluftverlust vorliegt, so kann hieraus eine Konsequenz gezogen werden. Beispielsweise kann eine Fehleranzeige aktiviert werden. Ebenfalls kann ein Eintrag in einem Fehlerspeicher vorgenommen werden.

Nützlicherweise ist vorgesehen, dass die Schritte (b) bis (d) nur dann ausgeführt werden, wenn sich der mindestens eine Druckluftverbraucher in einem Zustand befindet, in dem er bei intaktem Druckluftsystem keine Druckluft verbraucht. Grundsätzlich lässt sich das erfindungsgemäße Verfahren auch bei aktiven Druckluftverbrauchern durchführen, nämlich dann, wenn der Druckluftverbrauch bekannt ist. Die ermittelten Kennwerte werden sich dann zwar von denjenigen bei inaktiven Druckluftverbrauchern unterscheiden, die Vergleichswerte können aber ebenfalls entsprechend dem aktuellen Druckluftverbraucherzustand gewählt werden. Besonders einfach ist das Verfahren aber, wenn es nur dann ausgeführt wird, wenn die Druckluftverbraucher inaktiv sind, in guter Näherung also kein oder aufgrund der Aktivität nicht überwachter Nebenverbraucher nur ein geringer Druckluftverbrauch zu erwarten ist.

Beispielsweise kann vorgesehen sein, dass außerhalb von druckluftverbraucherseitigen Druckaufbau- und -abbauphasen die Druckdifferenz zwischen den erfassten Drücken als Kennwert ermittelt wird. Während der Lastphasen des Kompressors wird im Druckluftsystem Druck aufgebaut, während der Druck während der Regenerationsphasen der in der Luftaufbereitungsanlage angeordneten Filtereinheit wieder abgebaut wird. Führt man das Verfahren außerhalb dieser Phasen durch, also in solchen Phasen, in denen keine oder nahezu keine Änderungen des Druckes zu erwarten ist, so ist die durch Druckmessung zu verschiedenen Zeitpunkte berechnete Druckdifferenz ein geeigneter Kennwert, der dann mit einem Differenzdruckvergleichswert verglichen werden kann. Im perfekten System bei vollständig inaktiven Druckluftverbrauchern wäre der Differenzdruckvergleichswert 0 anzusetzen. Im realen System ist stets mit Druckverlusten zu rechnen, denen aber bis zu einem gewissen Maß nicht nachgegangen werden muss. Folglich wird der Differenzdruckvergleichswert auf einen Wert ungleich 0 gesetzt.

Das erfindungsgemäße Verfahren ist in besonders vorteilhafter Weise dadurch weitergebildet,

- dass während druckluftverbraucherseitiger Druckaufbau- und -abbauphasen zu- und abströmende Luftmengen erfasst werden,

- dass der Schritt (b) sowohl während der Druckaufbauals auch während der Druckabbauphase durchgeführt wird,

- dass unter Berücksichtigung der während der Druckaufbauphase erfassten Drücke und der zuströmenden Luftmenge ein erstes theoretisches Volumen berechnet wird,

- dass unter Berücksichtigung der während der Druckaufbauphase erfassten Drücke und der zuströmenden Luftmenge ein zweites theoretisches Volumen berechnet wird und

- dass die Differenz zwischen dem ersten theoretischen Volumen und dem zweiten theoretischen Volumen als Kennwert ermittelt wird.

Die Erfindung lässt sich also auch während der Druckaufbau- und -abbauphasen realisieren, indem zusätzlich die zuströmenden beziehungsweise die abströmenden Luftmengen, beispielsweise durch zeitliche Integration von Strömungsraten, erfasst werden. Da das Produkt aus Druck und Volumen bei konstanter Temperatur in guter Näherung proportional zur vorhandenen Luftmenge ist, lässt sich durch die Messung von zwei Drücken zu verschiedenen Zeitpunkten und der zwischenzeitlich zugeführten oder abgeführten Druckluft ein theoretisches Volumen oder ein hierzu proportionaler bzw. davon abhängiger Kennwert berechnen. Im idealen System wäre dieses theoretische Volumen während der Druckaufbauphase identisch zu dem theoretischen Volumen während der Druckabbauphase. Im realen System wird man jedoch feststellen, dass das auf der Grundlage von Messwerten der Druckaufbauphase errechnete Volumen größer ist als jenes, welches auf der Grundlage von während der Druckabbauphase ermittelten Messwerten berechnet wird. Dies hängt damit zusammen, dass in die Berechnung des theoretischen Volumens die Differenzdruckmenge, also die zuströmende Luftmenge oder die abströmende Luftmenge linear eingehen. Während des Druckaufbaus wird die zuströmende Luftmenge zwischen den beiden Messzeitpunkten durch ein Leck im System erhöht, während die abströmende Luftmenge während des Druckabbaus aufgrund des Lecks erniedrigt wird. Je größer die Differenz zwischen den theoretischen Volumina ist, desto größer ist also der Druckluftverlust. Der anzusetzende Vergleichswert ist also ein Volumendifferenzwert, der dem tolerierbaren Druckluftverlust entspricht. Die Mengen an zu- beziehungsweise abströmender Luft während der Förderbeziehungsweise Regenerationsphase können beispielsweise auf der Grundlage von Informationen eines Durchflusssensors gemessen werden. Ebenfalls können alternativ oder zusätzlich Berechnungen angestellt werden. Während der Förderphase erfolgen solche Berechnungen auf der Grundlage der Kompressorcharakteristik, welche die Fördermenge bei verschiedenen Gegendrücken definiert. Durch bilineare Interpolation dieser bekannten Beziehungen kann die Fördermenge in jedem Betriebszustand ermittelt werden, wobei der Systemdruck als Kompressorgegendruck und die Kompressordrehzahl berücksichtigt werden. Dabei wird die Kompressordrehzahl beispielsweise durch Multiplikation der Motordrehzahl, die beispielsweise auf dem CAN-Bus zur Verfügung steht, multipliziert mit der Kompressorförderrate bestimmt. Während der Regenerationsphase können Luftmengen auf der Grundlage von Druckverhältnissen bestimmt werden, wobei es in den Druckbereichen, in denen das System eine Regeneration durchführen kann, bekannte Beziehungen zwischen Druckverhältnissen und Regenerationsluftmengen gibt.

Weiterhin ist es besonders bevorzugt, dass der Vergleichswert über eine Vielzahl von Überwachungszyklen erlernt wird. Da jedes Druckluftsystem aufgrund seiner Komplexität eine andere "natürliche Leckrate" haben wird, ist es sinnvoll, die Vergleichswerte nicht von vorn herein streng festzusetzen, sondern diese das System erlernen zu lassen, insbesondere im Rahmen der ersten Druckaufbau- und Druckabbauphasen nach einer Inspektion, bei der der ordnungsgemäße Zustand des Druckluftsystems festgestellt wurde.

Die Erfindung besteht weiterhin in einer elektronischen Vorrichtung zum Überwachen der Dichtheit eines in einem Nutzfahrzeug angeordneten Druckluftsystems, mit:

(a) Mitteln zum Erfassen eines Betriebszustandes von mindestens einem Druckluftverbraucher,

(b) Mitteln zum Erfassen eines in dem Druckluftsystem herrschenden ersten Druckes zu einem ersten Zeitpunkt und Erfassen eines in dem Druckluftsystem herrschenden zweiten Druckes zu einem zweiten Zeitpunkt,

(c) Mitteln zum Ermitteln eines Kennwertes unter Berücksichtigung der erfassten Drücke und des Betriebszustandes des mindestens einen Druckluftverbrauchers,

(d) Mitteln zum Vergleichen des Kennwertes mit einem vorgegebenen Vergleichswert.

Auf diese Weise werden die Vorteile und Besonderheiten des erfindungsgemäßen Verfahrens auch im Rahmen einer Vorrichtung umgesetzt, bei der es sich insbesondere um einen im Fahrzeug angeordneten Computer beziehungsweise eine Steuereinheit irgendeiner Fahrzeugkomponente handelt, insbesondere der Druckluftaufbereitungsanlage.

Die elektronische Vorrichtung ist besonders nützlich dadurch weitergebildet, dass Mittel zum Erlernen des Vergleichswertes über eine Vielzahl von Überwachungszyklen vorgesehen sind.

Auf der Grundlage der vorliegenden Erfindung werden somit ein Verfahren und eine Vorrichtung zur Verfügung gestellt, mit denen der Fahrer eines Nutzfahrzeugs in komfortabler Weise über eine nicht mehr tolerable Leckage im Druckluftsystem informiert wird. Sowohl die Erfassung der hierfür erforderlichen Messdaten als auch der Informationsaustausch mit einer Anzeige in der Fahrerkabine kann direkt beziehungsweise über ein Kommunikationsnetzwerk, beispielsweise den Fahrzeug- CAN- Bus, erfolgen. Das Informieren des Fahrers kann durch einen Vermerk in einem Fehlerspeicher des Nutzfahrzeugs begleitet werden. Bei kleineren Leckagen ist es auch denkbar, zunächst nur einen Vermerk in den Fehlerspeicher zu schreiben, ohne den Fahrer hierüber in Kenntnis zu setzen.

Die Erfindung wird nun mit Bezug auf die begleitenden Zeichnungen anhand besonders bevorzugter Ausführungsformen beispielhaft erläutert.

Es zeigen:

Figur 1    eine schematische Darstellung eines Druckluftsystems mit elektropneumatischer Bremsanlage und

Figur 2    ein Flussdiagramm zur Erläuterung eines erfindungsgemäßen Verfahrens.

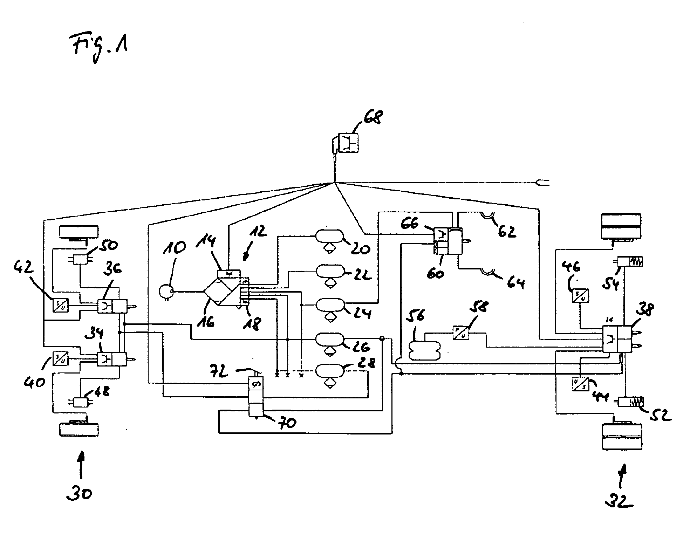

Figur 1 zeigt eine schematische Darstellung eines Druckluftsystems mit elektropneumatischer Bremsanlage. Das dargestellte Druckluftsystem umfasst einen Kompressor 10, eine Luftaufbereitungsanlage 12 und ein von diesen Komponenten mit Druckluft beliefertes Bremssystem. Die Luftaufbereitungsanlage 12 weist als zentrale Einheiten eine elektronische Steuereinheit 14, einen Luftfilter 16, ein Mehrkreisschutzventil 18 und einen nicht dargestellten Druckregler auf. Weitere Komponenten der Luftaufbereitungsanlage 12 sind im Allgemeinen eine Vielzahl von Sensoren, insbesondere Drucksensoren und Temperatursensoren sowie zahlreiche pneumatische und elektropneumatische Einheiten, die die Luftführung innerhalb der Luftaufbereitungsanlage 12 zum Zwecke des Druckluftaufbaus in den angeschlossenen Verbraucherkreisen und zum Zwecke der Regeration der Filtereinheit 16 beeinflusst. Die von der Luftaufbereitungsanlage 12 mit Druckluft belieferte Bremsanlage umfasst im vorliegenden Beispiel fünf Druckluftvorratsbehälter 20, 22, 24, 26, 28, die verschiedene Aufgaben erfüllen, auch außerhalb der eigentlichen Bremsanlage. Von den Luftvorratsbehältern 26, 28 wird Druckluft zu den Bremssystemen der Vorderachse 30 beziehungsweise der Hinterachse 32 geliefert. Sowohl im Bereich der Vorderachse 30 als auch im Bereich der Hinterachse 32 stehen Bremsmodule 34, 36, 38, Schlupfsensoren 40, 42, 44, 46 und Bremszylinder 48, 50, 52, 54 zur Verfügung, wobei die Bremszylinder 52, 54 für die Hinterachse 32 als Kombizylinder, das heißt Bremszylinder mit Federspeicher, realisiert sind. Drucksensoren die im Bereich der Vorderachse 30 und der Hinterachse 32 zur Realisierung der verschiedenen Bremsfunktionen vorhanden sind, sind nicht explizit dargestellt. An das Bremsmodul der Hinterachse 38 ist weiterhin eine Luftfedereinrichtung 56 mit Drucksensor 58 angeschlossen. Eine weitere Komponente der Bremsanlage stellt das Anhängersteuerventil 60 dar, welches Kupplungen 62, 64 für die Versorgung und die Ansteuerung einer Anhängerbremse aufweist. Eine elektronische Steuereinheit 66 des Anhängersteuermoduls 60 steht mit einer zentralen Steuereinheit 68 in Verbindung, wobei diese zentrale Steuereinheit 68 beispielsweise ebenfalls mit den Steuereinheiten der Bremsmodule 34, 36, 38 in Verbindung stehen. Die elektrischen Verbindungen zwischen den genannten Steuereinheiten können direkt vorliegen oder durch ein Kommunikationsnetzwerk realisiert sein. Ebenfalls ist ein Bremsventil 70 dargestellt, von dem elektrische und pneumatische Signale in Abhängigkeit der Betätigung eines Bremspedals 72 zur Verfügung gestellt werden.

Die vorliegende Erfindung, nämlich das automatische Überwachungssystem im Hinblick auf die Dichtheit des Druckluftsystems, kann prinzipiell in jeder der dargestellten elektronischen Steuereinheiten integriert sein, insbesondere dann, wenn diese vernetzt sind. Besonders bieten sich die elektronischen Steuereinheiten 14 der Luftaufbereitungsanlage 12 beziehungsweise die zentrale Steuereinheit 68 für diese Zwecke an, denn die elektronische Steuereinheit der Druckluftaufbereitungsanlage 12 steht im Allgemeinen direkt mit Drucksensoren zum Erfassen der relevanten Drücke in Verbindung, und sie lässt sich in einfacher Weise mit Einrichtungen zum Messen einer Strömungsrate koppeln, während die zentrale Steuereinheit 68 mit jeglichen Eigenschaften ausgestattet werden kann und in besonders einfacher Weise im Hinblick auf die erfindungsgemäßen Eigenschaften erweiterbar ist.

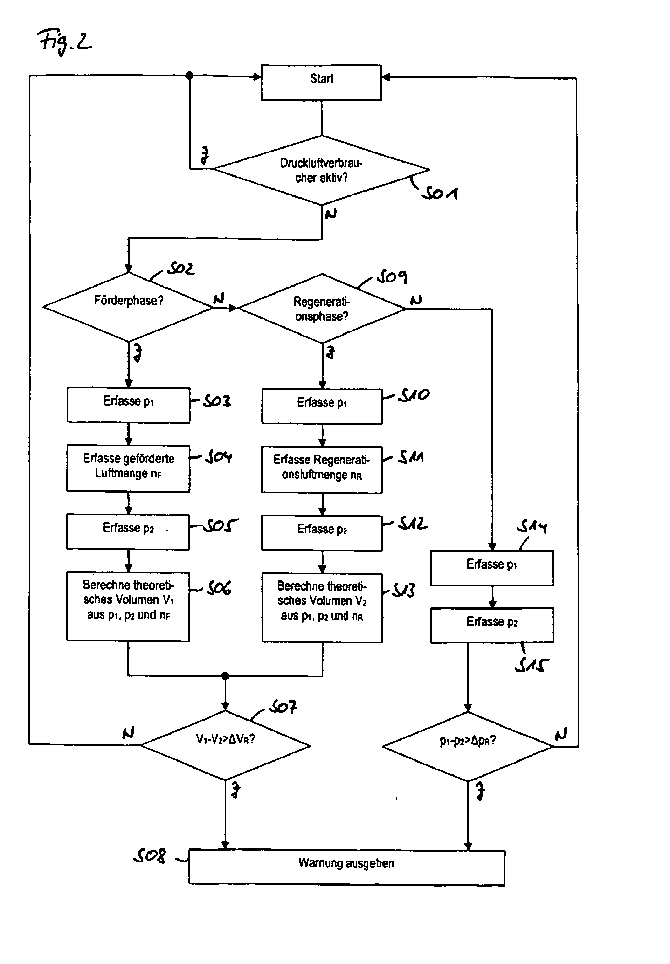

Figur 2 zeigt ein Flussdiagramm zur Erläuterung eines erfindungsgemäßen Verfahrens. Die verwendeten Bezugszeichen beziehen sich auf Figur 1. Im Rahmen des Überwachungsverfahrens wird gemäß Schritt S01 zunächst geprüft, ob Druckluftverbraucher im Druckluftsystem aktiv sind. Diese Information kann von einer elektronischen Steuerung im Allgemeinen über den CAN-Bus bezogen werden, wobei die Information jedoch auf solche Druckluftverbraucher beschränkt ist, die überhaupt einer Aktivitätsüberwachung zugänglich sind. Da die wesentlichen Druckluftverbraucher, beispielsweise das Bremssystem des Nutzfahrzeugs, jedoch überwacht werden, kann der Druckluftverbrauch der nicht überwachten Nebenverbraucher im Zusammenhang mit den weiteren Verfahrensschritten vernachlässigt beziehungsweise im Zusammenhang mit der Bestimmung der Vergleichswerte berücksichtigt werden. Sind die wesentlichen Druckluftverbraucher noch aktiv, so wird gemäß der hier dargestellten Ausführungsform des erfindungsgemäßen Verfahrens nicht in die Abarbeitung der weiteren Verfahrensschritte eingetreten. Erst dann, wenn die Druckluftverbraucher nicht mehr aktiv sind, wird in Schritt S02 geprüft, ob eine Förderphase vorliegt. Ist dies der Fall, so wird in Schritt S03 ein Druck $p_1$ erfasst. Nachfolgend wird dann über einen definierten Zeitraum in Schritt S04 die an den Kompressor 10 geförderte Luftmenge $n_F$ erfasst, woraufhin in Schritt SO5 wiederum ein Druck erfasst wird, nämlich der Druck $p_2$. In Schritt S06 wird nun ein theoretisches Volumen $V_1$ auf der Grundlage der erfassten Werte für $p_1$, $p_2$ und $n_F$ berechnet, beispielsweise auf der Grundlage der folgenden Gleichung:

$$V_1 = \frac{p_1}{p_2} + \frac{n_F}{p_2} \cdot RT$$

Bei der Größe R handelt es sich um eine dem allgemeinen Gesetz für ideale Gase entnommenen Konstante, die im Rahmen der Berechnung auch fortgelassen werden kann, da ohnehin der nun berechnete theoretische Volumenwert $V_1$ lediglich mit einem anderen in ähnlicher Weise berechneten theoretischen Volumenwert in eine Beziehung gebracht werden soll. Ausgehend von dem Schritt S06 wird nämlich in Schritt S07 die Differenz dieses Volumenwertes $V_1$ und einem während einer Regerationsphase bestimmten Volumenwert $V_2$ mit einem Referenzdifferenzvolumenwert $\Delta V_R$ verglichen. Ist die ermittelte Differenz größer als der Referenzvolumenwert, so wird gemäß Schritt S08 eine Warnung ausgegeben, da nun ein unakzeptabler Druckluftverlust vorliegt. Ist die Differenz zwischen $V_1$ und $V_2$ noch klein genug, so kehrt der Verfahrensablauf über die Aktivitätsprüfung der Druckluftverbraucher gemäß Schritt S01 wieder zu Schritt S02 zurück, wo geprüft wird, ob eine Förderphase vorliegt.

Ist diese Förderphase inzwischen abgeschlossen, so wird in Schritt S09 geprüft, ob eine Regenerationsphase vorliegt. Ist dies der Fall, so wird in Schritt S10 wiederum ein Druck $p_1$ erfasst. Im Anschluss daran wird in Schritt S11 die Regenerationsluftmenge $n_R$ erfasst. Im Anschluss daran wird in Schritt S12 wiederum der Druck gemessen, mit dem Ergebnis des Druckes $p_2$. In Schritt S13 wird dann aus den nun bestimmten Werten $p_1$, $p_2$ und $n_R$ das theoretische Volumen $V_2$ berechnet, beispielsweise auf der Grundlage der folgenden Gleichung:

$$V_2 = \frac{p_1}{p_2} + \frac{n_R}{p_2} \cdot RT$$

 Nachfolgend wird zu Schritt S07 übergegangen, in dem der bereits beschriebene Vergleich stattfindet.

Wird in Schritt S09 erkannt, dass keine Regenerationsphase vorliegt, während ja vorangehend in Schritt S02 erkannt wurde, dass keine Förderphase vorliegt, so geht der Verfahrensablauf zu Schritt S14 über, wo ein Druck $p_1$ erfasst wird. Nach einer gewissen Zeit wird in Schritt S15 ein Druck $p_2$ erfasst. Eine zwischenzeitliche Erfassung der Regenerationsluftmenge oder der geförderten Luftmenge, beispielsweise durch Integrieren der jeweiligen Raten über die Zeit, ist hier nicht erforderlich, da weder Förderung noch Regeneration stattfinden. Daher können auch direkt die beiden Druckwerte als Kriterium dafür herangezogen werden, ob das System dicht ist, nämlich indem die Differenz der Druckwerte $p_1$ und $p_2$ mit einem Differenzreferenzdruck $\Delta p_R$ verglichen wird. Ist die Differenz größer als der Differenzreferenzdruck, so ist von einem übermäßigen Druckluftverlust auszugehen, und es wird gemäß Schritt S08 eine Warnung abgegeben. Anderenfalls kehrt der Verfahrensablauf zu seinem Beginn zurück.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste:**

| 10 | Kompressor |
| 12 | Luftaufbereitungsanlage |
| 14 | Steuereinheit |
| 16 | Luftfilter |
| 18 | Mehrkreisschutzventil |
| 20 | Druckluftvorratsbehälter |
| 22 | Druckluftvorratsbehälter |
| 24 | Druckluftvorratsbehälter |
| 26 | Druckluftvorratsbehälter |
| 28 | Druckluftvorratsbehälter |
| 30 | Vorderachse |

32   Hinterachse

34   Bremsmodul

36   Bremsmodul

38   Bremsmodul

40   Schlupfsensor

42   Schlupfsensor

44   Schlupfsensor

46   Schlupfsensor

48   Bremszylinder

50   Bremszylinder

52   Bremszylinder

54   Bremszylinder

56   Luftfedereinrichtung

58   Drucksensor

60   Anhängersteuerventil

62   Kupplung

64   Kupplung

66   Steuereinheit

68   Steuereinheit

70   Bremsventil

72   Bremspedal

**Patentansprüche**

1.  Verfahren zum Überwachen der Dichtheit eines in einem Nutzfahrzeug angeordneten Druckluftsystems, mit den Schritten:

    (a) Erfassen eines Betriebszustandes von mindestens einem Druckluftverbraucher,
    (b) Erfassen eines in dem Druckluftsystem herrschenden ersten Druckes zu einem ersten Zeitpunkt und Erfassen eines in dem Druckluftsystem herrschenden zweiten Druckes zu einem zweiten Zeitpunkt,
    (c) Ermitteln eines Kennwertes unter Berücksichtigung der erfassten Drücke und des Betriebszustandes des mindestens einen Druckluftverbrauchers,
(d) Vergleichen des Kennwertes mit einem Vergleichswert.

2.  Verfahren nach Anspruch 1, **dadurch gekennzeichnet, dass** die Schritte (b) bis (d) nur dann ausgeführt werden, wenn sich der mindestens eine Druckluftverbraucher in einem Zustand befindet, in dem er bei intaktem Druckluftsystem keine Druckluft verbraucht.

3.  Verfahren nach Anspruch 1 oder 2, **dadurch gekennzeichnet, dass** außerhalb von druckluftverbraucherseitigen Druckaufbau- und -abbauphasen die Druckdifferenz zwischen den erfassten Drücken als Kennwert ermittelt wird.

4.  Verfahren nach Anspruch 1 oder 2, **dadurch gekennzeichnet,**

    - **dass** während druckluftverbraucherseitiger Druckaufbau- und -abbauphasen zu- und abströmende Luftmengen erfasst werden,
    - **dass** der Schritt (b) sowohl während der Druckaufbauals auch während der Druckabbauphase durchgeführt wird,
    - **dass** unter Berücksichtigung der während der Druckaufbauphase erfassten Drücke und der zuströmenden Luftmenge ein erstes theoretisches Volumen berechnet wird,
    - **dass** unter Berücksichtigung der während der Druckaufbauphase erfassten Drücke und der zuströmenden Luftmenge ein zweites theoretisches Volumen berechnet wird und
    - **dass** die Differenz zwischen dem ersten theoretischen Volumen und dem zweiten theoretischen Volumen als Kennwert ermittelt wird.

5.  Verfahren nach Anspruch 4, **dadurch gekennzeichnet, dass** der Vergleichswert über eine Vielzahl von Überwachungszyklen erlernt wird.

6.  Elektronische Vorrichtung zum Überwachen der Dichtheit eines in einem Nutzfahrzeug angeordneten Druckluftsystems, mit:

    (a) Mitteln zum Erfassen eines Betriebszustandes von mindestens einem Druckluftverbraucher,
    (b) Mitteln zum Erfassen eines in dem Druckluftsystem herrschenden ersten Druckes zu einem ersten Zeitpunkt und Erfassen eines in dem Druckluftsystem herrschenden zweiten Druckes zu einem zweiten Zeitpunkt,
    (c) Mitteln zum Ermitteln eines Kennwertes unter Berücksichtigung der erfassten Drücke und des Betriebszustandes des mindestens einen Druckluftverbrauchers,

(d) Mitteln zum Vergleichen des Kennwertes mit einem vorgegebenen Vergleichswert.

**7.** Elektronische Vorrichtung nach Anspruch 6, **dadurch gekennzeichnet, dass** Mittel zum Erlernen des Vergleichswertes über eine Vielzahl von Überwachungszyklen vorgesehen sind.

**Claims**

**1.** Method for monitoring the air-tightness of a compressed air system fitted in a commercial vehicle, comprising the steps:

(a) determination of an operating condition of at least one compressed air consumer,

(b) determination of a first pressure in the compressed air system at a first point in time and of a second pressure in the compressed air system at a second point in time,

(c) determination of a characteristic value that takes account of the pressures determined and of the operating condition of the at least one compressed air consumer,

(d) comparison of the said characteristic value with a comparison value.

**2.** Method according to Claim 1, **characterised in that** steps (b) to (d) are only carried out if the at least one compressed air consumer is in a condition in which, when the compressed air system is intact, the compressed air consumer does not consume any compressed air.

**3.** Method according to Claims 1 or 2, **characterised in that** other than during pressure increase and pressure reduction phases caused by the compressed air consumer, the pressure difference between the pressures determined is taken as the characteristic value.

**4.** Method according to Claims 1 or 2, **characterised in that**

- during pressure increase and pressure reduction phases caused by the compressed air consumer, the quantities of air flowing in and out are determined,

- step (b) is carried out both during the pressure increase and during the pressure reduction phase,

- having regard to the pressures determined during the pressure increase phase and to the quantity of air flowing in, a first theoretical volume is calculated,

- having regard to the pressures determined during the pressure increase phase and to the quantity of air flowing in, a second theoretical volume is calculated, and

- the difference between the first and second theoretical volumes is taken as the characteristic value.

**5.** Method according to Claim 4, **characterised in that** the comparison value is learned over numerous monitoring cycles.

**6.** Electronic device for monitoring the air-tightness of a compressed air system fitted in a commercial vehicle, with

(a) means for the determination of an operating condition of at least one compressed air consumer,

(b) means for the determination of a first pressure in the compressed air system at a first point in time and of a second pressure in the compressed air system at a second point in time,

(c) means for the determination of a characteristic value that takes account of the pressures determined and of the operating condition of the at least one compressed air consumer,

(d) means for the comparison of the said characteristic value with a specified comparison value.

**7.** Electronic device according to Claim 6, **characterised in that** means are provided for learning the comparison value over numerous monitoring cycles.

**Revendications**

**1.** Procédé de contrôle de l'étanchéité d'un système à air comprimé monté dans un véhicule utilitaire, comprenant les stades :

(a) détection d'un état de fonctionnement d'un utilisateur d'air comprimé,

(b) détection d'une première pression régnant dans le système à air comprimé à un premier instant et détection d'une deuxième pression régnant dans le système à air comprimé à un deuxième instant,

(c) détermination d'une valeur caractéristique en tenant compte des pressions détectées et de l'état de fonctionnement du au moins un utilisateur d'air comprimé,

(d) comparaison de la valeur caractéristique à une valeur de comparaison.

**2.** Procédé suivant la revendication 1, **caractérisé en ce que** l'on n'effectue les stades (b) à (d) que si le au moins un utilisateur d'air comprimé se trouve dans un état dans lequel, alors que le système à air comprimé est intact, il ne consomme pas d'air comprimé.

3. Procédé suivant la revendication 1 ou 2, **caractérisé en ce que** l'on détermine, en dehors des phases d'établissement de la pression et de suppression de la pression du côté de l'utilisateur d'air comprimé, la différence de pression entre les pressions détectées comme valeur caractéristique.

4. Procédé suivant la revendication 1 ou 2, **caractérisé**

- **en ce que** l'on détecte, pendant l'établissement de la pression et la suppression de la pression du côté de l'utilisateur d'air comprimé, des quantités d'air entrantes et sortantes,
- **en ce que** l'on effectue le stade (b) à la fois pendant la phase d'établissement de la pression et pendant la phase de suppression de la pression,
- **en ce que** l'on calcule un premier volume théorique en tenant compte des pressions détectées pendant la phase d'établissement de la pression et de la quantité d'air entrante,
- **en ce que** l'on calcule un deuxième volume théorique en tenant compte des pressions détectées pendant la phase d'établissement de la pression et de la quantité d'air entrante et
- **en ce que** l'on détermine comme valeur caractéristique la différence entre le premier volume théorique et le deuxième volume théorique.

5. Procédé suivant la revendication 4, **caractérisé en ce que** l'on fait l'apprentissage de la valeur de comparaison sur une pluralité de cycles de contrôle.

6. Dispositif électronique de contrôle de l'étanchéité d'un système à air comprimé monté dans un véhicule utilitaire, comprenant :

(a) des moyens de détection d'un état de fonctionnement d'au moins un utilisateur d'air comprimé,
(b) des moyens de détection d'une première pression régnant dans le système à air comprimé à un premier instant et de détection d'une deuxième pression régnant dans le système à air comprimé à un deuxième instant,
(c) des moyens de détermination d'une valeur caractéristique en tenant compte des pressions détectées et de l'état de fonctionnement du au moins un utilisateur d'air comprimé,
(d) des moyens de comparaison de la valeur caractéristique à une valeur de comparaison donnée à l'avance.

7. Dispositif électronique suivant la revendication 6, **ca-**

**ractérisé en ce qu'**il est prévu des moyens d'apprentissage de la valeur de comparaison sur une pluralité de cycles de contrôle.

Fig. 1

Fig.2

```
                              ┌──────────────┐
                         ┌───►│    Start     │◄──────────────────┐
                         │    └──────┬───────┘                   │
                         │           │                           │
                         │        ╱──┴──╲                        │
                      J  │      ╱ Druckluft- ╲                   │
                         └─────╲ verbrau-    ╱ ── S01             │
                              ╲ cher aktiv? ╱                     │
                                ╲────┬────╱                       │
                                     │ N                          │
                                     │                            │
          ╱──────╲                ╱──┴──╲        ╱──────╲         │
        ╱ Förder- ╲ ── S02      ╱ Regenerati-╲ ── S09             │
       ╲ phase?   ╱────N───────►╲ onsphase?  ╱────N──┐            │
         ╲───┬──╱                ╲────┬────╱          │            │
             │ J                      │ J             │            │
     ┌───────┴──────┐         ┌───────┴──────┐  ┌─────┴──────┐    │
     │  Erfasse p1  │── S03   │  Erfasse p1  │──S10  Erfasse p1│──S14│
     └───────┬──────┘         └───────┬──────┘  └─────┬──────┘    │
             │                        │               │           │
     ┌───────┴──────┐         ┌───────┴──────┐  ┌─────┴──────┐    │
     │Erfasse ge-   │── S04   │Erfasse Regene-│──S11 Erfasse p2│   │
     │förderte      │         │rationsluft-  │   └─────┬──────┘    │
     │Luftmenge nF  │         │menge nR      │         │           │
     └───────┬──────┘         └───────┬──────┘      S15│           │
             │                        │               │           │
     ┌───────┴──────┐         ┌───────┴──────┐        │           │
     │ Erfasse p2   │── S05   │ Erfasse p2   │──S12    │           │
     └───────┬──────┘         └───────┬──────┘        │           │
             │                        │               │           │
     ┌───────┴──────┐         ┌───────┴──────┐        │           │
     │Berechne theo-│── S06   │Berechne theo-│──S13    │           │
     │retisches     │         │retisches     │         │           │
     │Volumen V1    │         │Volumen V2    │         │           │
     │aus p1,p2 u.nF│         │aus p1,p2 u.nR│         │           │
     └───────┬──────┘         └───────┬──────┘        │           │
             └────────────┬───────────┘               │           │
                        ╱─┴─╲ ── S07                ╱──┴──╲        │
                  N   ╱ V1-V2> ╲               N  ╱ p1-p2>  ╲      │
               ───────╲ ΔVR?   ╱               ───╲  ΔpR?   ╱──────┘
                       ╲──┬──╱                     ╲───┬──╱
                          │ J                          │ J
                          │                            │
       S08 ──  ┌──────────┴────────────────────────────┴──────┐
               │           Warnung ausgeben                    │
               └──────────────────────────────────────────────┘
```

**IN DER BESCHREIBUNG AUFGEFÜHRTE DOKUMENTE**

**In der Beschreibung aufgeführte Patentdokumente**

- DE 10236391 B3